# EUROPÄISCHE PATENTSCHRIFT

(11) **EP 3 303 903 B1**
(45) Veröffentlichungstag und Bekanntmachung des Hinweises auf die Patenterteilung: **08.07.2020**
(21) Anmeldenummer: 16732238.7
(22) Anmeldetag: 31.05.2016
(51) Int. Cl.: F17C 7/00, H01B 3/56, H02B 3/00, H01H 33/56, H02B 13/055

(54) **SERVICEGERÄT FÜR DEN EINSATZ BEI DER WARTUNG VON ELEKTRISCHEN SCHALTANLAGEN ISOLIERT MIT EIN MEHRKOMPONENTIGES ISOLIERGAS**
SERVICE DEVICE FOR USE DURING MAINTENANCE OF ELECTRICAL SWITCHGEARS INSULATED USING A MULTI-COMPONENT INSULATING GAS
UNITÉ DE SERVICE DESTINÉE À ÊTRE UTILISÉE LORS DE L'ENTRETIEN D'INSTALLATIONS DE DISTRIBUTION ÉLECTRIQUES ISOLÉES AVEC GAZ ISOLANT À PLUSIEURS COMPOSANTS

(30) Priorität: 02.06.2015 DE 102015108748
(43) Veröffentlichungstag der Anmeldung: 11.04.2018
(73) Patentinhaber: Firma DILO Armaturen und Anlagen GmbH, 87727 Babenhausen (DE)
(72) Erfinder: SIEBER, Peter, 89281 Altenstadt (DE); KOHLER, Robert, 89297 Roggenburg (DE); GESTLE, Mathias, 89293 Kellmünz (DE)
(74) Vertreter: Patentanwälte Olbricht, Buchold, Keulertz Partnerschaft mbB
(86) Internationale Anmeldenummer: PCT/EP2016/062309
(87) Internationale Veröffentlichungsnummer: WO 2016/193272

(56) Entgegenhaltungen:
- EP-A2- 1 091 182
- WO-A1-2014/037396
- JP-A- 2000 059 934
- KR-A- 20120 039 771

## Beschreibung

Die Erfindung betrifft ein Servicegerät für ein mehrkomponentiges Isoliergas, insbesondere für den Einsatz bei der Wartung von elektrischen Schaltanlagen. Die Erfindung betrifft weiterhin ein Verfahren für das Handling eines mehrkomponentigen Isoliergases, insbesondere bei der Wartung von elektrischen Schaltanlagen.

Bei elektrischen Schaltanlagen stellen Lichtbögen, die bei Schaltvorgängen mit höheren Spannungen entstehen können, ein Problem für die Haltbarkeit solcher Anlagen dar. Durch Lichtbögen werden die Schaltelemente in kurzer Zeit beschädigt bzw. zerstört. Aus diesem Grund werden in sogenannten gasisolierten Schaltanlagen Isoliergase eingesetzt, die das Entstehen von Lichtbögen reduzieren bzw. unterbinden. Gasisolierte Schaltanlagen weisen einen hermetisch abgegrenzten Anlagenraum auf, aus dem bei der Inbetriebnahme zunächst die Luft entfernt wird und der Anlagenraum anschließend mit dem Isoliergas befüllt wird.

Bei der Wartung von gasisolierten Schaltanlagen muss das sich im Anlagenraum befindliche Isoliergas aus dem Anlagenraum entfernt werden, bevor die Wartung durchgeführt werden kann. Nach der Wartung muss das Isoliergas dann wieder zurück in den Anlagenraum transportiert werden. Für eine derartige Handhabung von Isoliergasen sind diverse Servicegeräte am Markt erhältlich.

Schwefelhexafluorid (SF6) ist ein sich sehr inert verhaltendes Gas, welches aufgrund seiner elektrisch isolierenden Eigenschaften bestens als Isoliergas für Schaltanlagen geeignet ist. Allerdings ist Schwefelhexafluorid gleichzeitig ein Treibhausgas. Aus diesem Grund soll die Verwendung von Schwefelhexafluorid reduziert werden. Seit kurzem sind als Ersatz für Schwefelhexafluorid als Isoliergas verschiedene Gasmischungen, die ähnlich gute Isoliereigenschaften aufweisen, bekannt. Derartige Gasmischungen enthalten teilweise noch Schwefelhexafluorid als eine Teilkomponente, andere Gasmischungen sind bereits völlig frei von Schwefelhexafluorid. Für die Funktion aller dieser Gasmischungen ist deren genaues Mischungsverhältnis von Bedeutung.

Aus JP 2000 059 934 A ist ein System bekannt, mit welchem ein ausschließlich aus Schwefelhexafluorid bestehendes Isoliergas aus einer elektrischen Schaltanlage entnommen und wieder in diese zurückgeführt werden kann. In diesem System wird das schwefelhexafluorid bei der Entnahme komprimiert, gekühlt und in flüssiger Form vom Kühler zu einem Speicherbehälter geführt. Bei der Rückführung wird das Schwefelhexafluorid zunächst flüssig von einem Speicherbehälter zu einem Verdampfer gebracht, wo es aufbereitet und in einen gasförmigen Zustand überführt wird. Nachteilig an diesem System ist, dass es ungeeignet für Isoliergase ist, welche aus einem Gasgemisch bestehen. Sowohl bei der Entnahme aus der Schaltanlage als auch bei der Rückführung können einzelne Komponenten des Gasgemisches vor anderen Komponenten kondensieren, so dass eine Entmischung erfolgt und das Isoliergas nach der Rückführung nicht mehr dieselbe Zusammensetzung aufweist, wie bei der Entnahme aus der Schaltanlage. Aus WO 2014/037396 A1 ist ein Gerät und ein Verfahren bekannt, mit dem eine elektrische Schaltanlage mit einem aus einem Gasgemisch bestehenden Isoliergas befüllt werden kann. Mit der hier offenbarten Technologie kann eine Schaltanlage mit erstmalig angemischten Isoliergas befüllt werden. Diese Technologie ermöglicht jedoch keine Wartung von Schaltanlagen, die bereits mit einem aus einem Gasgemisch bestehenden Isoliergas gefüllt sind, da keine Entnahme und Rückführung eines bereits in der Schaltanlage befindlichen Gasgemisches möglich ist.

Es ist die Aufgabe der Erfindung eine Möglichkeit für das Handling von mehrkomponentigen Isoliergasen zu schaffen.

Diese Aufgabe wird gelöst durch ein Servicegerät für ein mehrkomponentiges Isoliergas gemäß Anspruch 1.

Das Servicegerät für ein mehrkomponentiges Isoliergas für den Einsatz bei der Wartung von elektrischen Schaltanlagen mit einem Anlagenraum, umfasst
- einen Kompressor mit nachgeschaltetem Kühler,
- einen Speicherbehälter,
- wobei das Servicegerät an einen Anlagenraum angeschlossen oder anschließbar ist,
wobei der Kompressor das Isoliergas bei der Entnahme aus dem Anlagenraum verdichtet, wobei alle Komponenten des Isoliergases in dem Kompressor im gasförmigen Zustand verbleiben und der Kühler durch eine Steuerung so geregelt ist, dass eine Kondensierung des Isoliergases möglichst erst im Speicherbehälter erfolgt und ein Speicherheizgerät für den Speicherbehälter vorgesehen ist und beim Befüllen des Anlagenraumes das Speicherheizgerät das Isoliergas auf eine Temperatur oberhalb der kritischen Temperatur aller Komponenten des Isoliergases erwärmt, wobei insbesondere ein Leitungsheizgerät vorgesehen ist, welches zumindest teilweise die Rohrleitung zwischen dem Speicherbehälter und dem Anlagenraum und/oder Elemente in der Rohrleitung, wie beispielsweise Filtergehäuse oder Ähnliches erwärmt. Ein erfindungsgemäßes Servicegerät für die Wartung von elektrischen Schaltanlagen ist an einen Anlagenraum der Schaltanlage angeschlossen oder anschließbar. Dabei kann das Servicegerät entweder fest an der Schaltanlage installiert sein, wobei sich eine feste und dauerhaft verbundene Flanschverbindung zwischen Schaltanlage und Servicegerät anbietet, oder das Servicegerät kann als mobiles Gerät ausgeführt sein, welches lediglich während der Wartung mit der Schaltanlage verbunden wird. Im Falle eines mobilen Servicegerätes ist eine leicht lösbare Kupplung zwischen Servicegerät und Schaltanlage als Anschluss besser geeignet, um die benötigte Arbeitszeit zum Anschließen des Servicegerätes minimal zu halten. Selbstverständlich können aber auch mobile Servicegeräte an dauerhafte Flanschverbindungen und fest installierte Servicegeräte durch Schnellkupplungen an die Schaltanlage angeschlossen werden.

Ein erfindungsgemäßes Servicegerät weist darüber hinaus einen Kompressor mit nachgeschalteten Kühler auf. Bei der Entnahme des Isoliergases aus dem Anlagenraum saugt der Kompressor das Isoliergas an und verdichtet es anschließend. Der nachgeschaltete Kühler dient dazu, das während der Kompression im Kompressor erwärmte Isoliergas wieder abzukühlen. Bei der Druckerhöhung im Kompressor könnte es dazu kommen, das eine oder mehrere Komponenten des Isoliergases vom gasförmigen in den flüssigen Zustand übergehen. Dieser Phasenübergang erfolgt bei bestimmten Kombinationen aus Temperatur und Druck. Der Phasenübergang erfolgt zudem bei verschiedenen Gasen, somit auch bei den verschiedenen Komponenten des Isoliergases, an verschiedenen Punkten. Diese Punkte sind dabei jeweils durch Druck und Temperatur definiert. Ein erfindungsgemäßes Servicegerät ist geeignet zur Entnahme und Befüllung verschiedenster Isoliergase aus oder in eine Schaltanlage. So kann ein erfindungsgemäßes Servicegerät zur Bewegung des aus dem Stand der Technik bekannten Schwefelhexafluorid eingesetzt werden. Bei einem solchen einkomponentigen Isoliergas besteht die zuvor beschriebene Problematik der Entmischung einzelner Komponenten nicht. Zur Einsparung des klimaschädlichen Schwefelhexafluorid existieren Gasmischungen, welche nur noch einen Teil Schwefelhexafluorid enthalten und deren restlicher Teil von einem anderen Gas gebildet wird. Bereits hier tritt die Problematik der Entmischung der Komponenten auf, sobald eine Komponente sich bei der Entnahme oder Befüllung der Isoliergasmischung aus einer Schaltanlage verflüssigt. Dementsprechend ist ein erfindungsgemäßes Servicegerät bereits beim Handling von Isoliergasmischung vorteilhaft, welche zu einem gewissen Teil Schwefelhexafluorid enthalten. Seit einiger Zeit werden auch Isoliergase eingesetzt, welche frei von Schwefelhexafluorid sind. Diese Gase sind ebenfalls mehrkomponentig aufgebaut. Gerade bei diesen Gasen ist die Einhaltung des genauen Mischungsverhältnisses der einzelnen Komponenten zueinander von besonderer Bedeutung. Deshalb ist ein erfindungsgemäßes Servicegerät besonders geeignet für derartige mehrkomponentige Isoliergase, die frei von Schwefelhexafluorid sind. Derartige Isoliergase verwenden als Trägerkomponente meist N₂ oder CO₂. Dazu enthalten sie ein oder mehrere Isoliergase als Zusatzkomponenten. Als solche Zusatzkomponente ist beispielsweise C5-Keton, HF01234ze, HF01234yf oder Fluoronitril geeignet. Einige als Isoliergas geeignete Gasmischungen, welche frei sind von Schwefelhexafluorid, sind im Folgenden zusammen mit geeigneten Mischungsverhältnissen aufgelistet:

| Trägerkomponente | | Zusatzkomponente |
|---|---|---|
| N₂ | 97% | C5-Keton 3% |
| N₂ | 67% | HFO1234ze 33% |
| N₂ | 97% | HFO1234yf 3% |
| N₂ | 70% | HFO1234yf 30% |
| N₂ | 47% | HFO1234yf 53% |
| CO₂ | 47% | HFO1234yf 53% |
| CO₂ | 84,2% | Fluoronitril 15,8% |
| CO₂ | 90% | Fluoronitril 10% |

Eine Verflüssigung einzelner Komponenten des Isoliergases im Kompressor hätte mehrere Nachteile. Zum einen wäre die nahezu inkompressible flüssige Phase im Kompressor störend für dessen Betrieb und müsste über zusätzliche, aufwändige Vorkehrungen aus dem Kompressor abgeführt werden. Zum anderen würde die Verflüssigung einzelner Komponenten des Isoliergases zu einer Veränderung des Mischungsverhältnisses der Komponenten führen. Die verflüssigten Komponenten würden dem Isoliergas quasi verloren gehen und nur die verbleibenden gasförmigen Komponenten würden im Servicegerät weitertransportiert werden. Es hat sich herausgestellt, dass ein verändertes Mischungsverhältnis der Komponenten zu veränderten Isoliereigenschaften der Gasmischung führt, was bedenkliche Folgen für die Funktion der Schaltanlage haben kann. Somit stellt ein Wartungsvorgang bei einer gasisolierten Schaltanlage, bei dem eine Änderung des Mischungsverhältnisses des Isoliergases stattfindet, eine Verschlechterung der Isolierwirkung des Gases und damit der Funktion der gesamten Schaltanlage dar. Eine derartige Veränderung des Mischungsverhältnisses der Komponenten des Isoliergases würde sich gravierend auf die elektrischen Eigenschaften des Isoliergases auswirken und ist somit unbedingt zu vermeiden. Der Kompressor eines erfindungsgemäßen Servicegerätes wird zur Vermeidung dieser Probleme so betrieben, dass alle Komponenten des Isoliergases während des gesamten Kompressionsvorgangs in der gasförmigen Phase verbleiben. Ein Servicegerät umfasst weiterhin einen Kühler, der in Flussrichtung des Isoliergases nach dem Kompressor angeordnet ist. Dieser Kühler hat die Aufgabe, das beim Kompressionsvorgang aufgeheizte Isoliergas abzukühlen. Eine Abkühlung könnte, wie auch eine Druckerhöhung, zu einem Phasenübergang einer oder mehrerer Komponenten des Isoliergases in den flüssigen Zustand führen. Der Kühler eines erfindungsgemäßen Servicegerätes ist daher so geregelt, dass eine Abkühlung nur soweit erfolgt, dass sich alle Komponenten des Isoliergases beim Verlassen des Kühlers immer noch in der gasförmigen Phase befinden. Der Kühler kann dabei an verschiedenen Orten oder Positionen im Verlauf der Leitung entlang des Weges des Isoliergases vom Kompressor zum Speicherbehälter vorgesehen werden. Da viele am Markt erhältliche Kompressoren auf deren Ausgangsseite einen fest installieren Kühler aufweisen, ist es besonders einfach, diesen, direkt nach dem Kompressor angeordneten Kühler in einem erfindungsgemäßen Servicegerät zu verwenden. Es ist allerdings auch möglich den Kühler weiter entfernt vom Kompressor anzuordnen. Eine weiter vom Kompressor entfernte Anordnung des Kühlers hat wiederum den Vorteil, dass das nach der Kompression aufgeheizte Isoliergas durch seine erhöhte Temperatur besonders weit vom Kondensationspunkt aller seiner Komponenten entfernt ist. Diese Entfernung zum Kondensationspunkt bietet große Sicherheit gegen das Verflüssigen einzelner Komponenten auf dem Weg vom Kompressor zum Speicherbehälter, wo weitere Anlagenkomponenten, wie beispielsweise Filter oder Ähnliches, angeordnet sein können.

Es ist daher vorteilhafterweise vorgesehen, dass der Kühler mit dem Kompressor integriert, insbesondere in einem gemeinsamen Gestell oder Gehäuse ausgeführt ist, oder der Kühler vom Kompressor getrennt, insbesondere in der Nähe des Speicherbehälters vorgesehen ist.

Unter in der Nähe des Speicherbehälters sei verstanden, dass sich der Kühler zwischen dem Speicherbehälter und dem Kompressor zumindest in der Hälfte der Leitung befindet, die dem Speicherbehälter zugewandt ist, insbesondere in den letzten 5, 10, 20 oder 30 % dieser Leitungslänge.

Ein erfindungsgemäßes Servicegerät weist auch einen Speicherbehälter auf oder ist an einen solchen anschließbar, was ebenfalls von der Erfindung umfasst ist. In dem Speicherbehälter wird das Isoliergas nach der Entnahme aus dem Anlagenraum der Schaltanlage (zwischen-) gespeichert.

Besonders günstig für eine Speicherung des Isoliergases ist die platzsparende Speicherung im flüssigen Aggregatzustand. Es ist daher anzustreben, dass das Isoliergas beim Erreichen des Speicherbehälters in den flüssigen Zustand übergeht. Erfindungsgemäß wird der gasförmige Transport des Isoliergases und die anschließende flüssige Speicherung dadurch erreicht, dass Druck und Temperatur des Isoliergases im Kompressor bzw. Kühler so geregelt werden, dass sich das Isoliergas nach dem Verlassen des Kühlers mit all seinen Komponenten kurz vor dem Kondensationspunkt befindet. Auf dem letzten Stück des Weges und im Speicherbehälter kühlt das Isoliergas dann weiter ab, was schließlich zu einer Kondensation sämtlicher Komponenten im Speicherbehälter führt. Das Servicegerät wird dabei so geregelt, dass der Übergang von der gasförmigen in die flüssige Phase, die Kondensation, möglichst erst im Speicherbehälter erfolgt. Allerdings ist es für das Mischungsverhältnis des Isoliergases von geringer Bedeutung, wenn eine Kondensation einer oder mehrerer Komponenten bereits im Leitungssystem zwischen Kühler und Speicherbehälter erfolgt. Das Leitungssystem ist an dieser Stelle so beschaffen, dass auch verflüssigte Komponenten in flüssiger Form in den Speicherbehälter gelangen, wo dann eine Wiedervermischung mit den dort kondensierenden verbleibenden Komponenten erfolgt.

Besonders vorteilhaft an einem erfindungsgemäßen Servicegerät ist, dass durch eine entsprechende Regelung der Kompressor im optimalen Arbeitsbereich, ohne Entstehen einer flüssigen Komponente betrieben wird und gleichzeitig keine Entmischung des Isoliergases durch den Entnahmevorgang aus dem Anlagenraum einer Schaltanlage auftritt.

Ein erfindungsgemäßes Servicegerät für ein mehrkomponentiges Isoliergas weist neben einem Kompressor und einem Speicherbehälter ein Speicherheizgerät auf, welches den Speicherbehälter bei Bedarf beheizt. Das Servicegerät ist dabei, wie bereits weiter oben beschrieben wurde, an einen Anlagenraum einer elektrischen Schaltanlage angeschlossen oder anschließbar. Das Servicegerät kann dabei fest mit der Schaltanlage verbunden sein oder aber als mobiles Gerät ausgebildet seien, welches nur zur Wartung der Schaltanlage mit dem Anlagenraum verbunden oder an diesen angeschlossen wird. Das Isoliergas wird in einem Speicherbehälter des Servicegerätes (zwischen-)gespeichert oder, im Falle der Verwendung eines frisch angelieferten Isoliergases, in diesen Speicherbehälter vor der Befüllung des Anlagenraumes der Schaltanlage umgefüllt. Die Speicherung des Isoliergases im Speicherbehälter erfolgt dabei im flüssigen Zustand. Dies hat den Vorteil, dass das Volumen des Isoliergases deutlich geringer ist als in der gasförmigen Phase und so deutlich weniger Platz für die Speicherung benötigt wird. Die Speicherung des Isoliergases im Speicherbehälter kann allerdings auch zweiphasig stattfinden, nämlich mit einem Teil des Isoliergases in flüssiger Form und einem anderen Teil des Isoliergases im gasförmigen Zustand. Dieser Zustand kann beispielsweise eintreten, wenn sich nur wenig Isoliergas im Speicherbehälter befindet und sich Druck und/oder Temperatur im Speicherbehälter in der Nähe des Verdampfungspunktes einer oder mehrerer Komponenten des Isoliergases befinden.

Vor oder bei der Befüllung des Anlagenraums mit Isoliergas unter Verwendung eines erfindungsgemäßen Servicegerätes erhitzt das Speicherheizgerät das flüssig gespeicherte Isoliergases auf eine Temperatur, die oberhalb der kritischen Temperatur sämtlicher Komponenten des Isoliergases liegt. Unter kritischer Temperatur ist, entsprechend gängiger Fachliteratur, diejenige Temperatur zu verstehen, ab der unabhängig vom herrschenden Druck keine flüssige Phase eines Stoffes oder Stoffgemisches mehr auftreten kann. Dadurch, dass ein erfindungsgemäßes Servicegerät das Isoliergas vor dem Transport in den Anlagenraum einer Schaltanlage auf eine Temperatur oberhalb der kritischen Temperatur aller Komponenten des Isoliergases aufheizt ist sichergestellt, dass während des Transportes keine Komponente in den flüssigen Zustand übergeht und es so nicht zu einer Änderung des Mischungsverhältnisses der einzelnen Komponenten des Isoliergases zueinander kommen kann. Ein erfindungsgemäßes Servicegerät bietet daher den Vorteil, dass das Isoliergas mit dem gleichen, unveränderten Mischungsverhältnis dessen einzelner Komponenten zueinander, bezogen auf das Mischungsverhältnis im Speicherbehälter, im Anlagenraum ankommt. Somit ist sichergestellt, dass die tatsächlichen elektrischen Eigenschaften des Isoliergases nach dem Befüllen des Anlagenraums den Eigenschaften entsprechen, die für einen sicheren Betrieb der Schaltanlage erforderlich sind.

Es ist möglich, ein erfindungsgemäßes Servicegerät entsprechend der beschriebenen Ausführungsformen als reines Entnahmegerät für Isoliergas aus dem Anlagenraum einer Schaltanlage zu gestalten. Darüber hinaus kann aus den beschriebenen Ausführungsformen auch ein Servicegerät gestaltet werden, welches lediglich zur Befüllung eines Anlagenraumes mit Isoliergas dient. Schließlich ist es zusätzlich möglich, verschiedene Ausführungsformen miteinander zu kombinieren und so ein Servicegerät zu gestalten, welches in einer einzigen Ausführungsform sowohl dazu geeignet ist mehrkomponentiges Isoliergas aus einer Schaltanlage zu entnehmen und gleichermaßen dazu geeignet ist Isoliergas in den Anlagenraum einer Schaltanlage zu befüllen oder zurückzuführen.

Bei einer bevorzugten Ausgestaltung des Vorschlags ist vorgesehen, dass der Speicherbehälter als auswechselbare Gasflasche ausgebildet ist oder der Speicherbehälter fest am Servicegerät angeordnet ist. In dieser Ausführungsform wird eine auswechselbare Gasflasche als Speicherbehälter verwendet. Dies hat den Vorteil, dass größere Mengen an entnommenem Isoliergas auf mehrere schnell und leicht auswechselbare Gasflaschen verteilt werden kann. Besonders günstig ist die Verwendung eines gängigen oder genormten Typs an Gasflasche, der mit problemlos am Markt erhältlich ist. Dadurch kann bei ungeplant höherem Platzbedarf einfach vor Ort zusätzlicher Speicherraum beschafft werden ohne auf Spezialteile angewiesen zu sein. Durch die Verwendung einer auswechselbaren Gasflasche als Speicherbehälter wird auch der Transport oder der Austausch von Isoliergas zwischen verschiedenen Schaltanlagen erleichtert. Der Transport des Gases kann dann unabhängig vom Servicegerät erfolgen. Alternativ zu der auswechselbaren Gasflasche kann das Isoliergas im Servicegerät auch in einem fest angebrachten Speicherbehälter (zwischen-)gespeichert werden. Das Vorsehen eines fest angebrachten Speicherbehälters hat den Vorteil, dass alle benötigten Komponenten des Servicegerätes kompakt in einem Gerät verbaut sind was besonders praktisch bei mobil eingesetzten Servicegeräten ist. Es ist auch möglich, neben einem fest installierten Speicherbehälter zusätzlich einen oder mehrere Anschlüsse für auswechselbare Gasflaschen vorzusehen. In dieser Kombination werden die Vorteile beider Ausführungsformen für den Speicherbehälter in einem einzigen Gerät miteinander vereint.

Erfindungsgemäß ist vorgesehen, dass ein Leitungsheizgerät vorgesehen ist, welches zumindest teilweise die Rohrleitung zwischen dem Speicherbehälter und dem Anlagenraum und/oder Elemente in der Rohrleitung, wie beispielsweise Filtergehäuse oder Ähnliches erwärmt. In einer weiteren Ausführungsform eines Servicegerätes ist zusätzlich zu dem Speicherheizgerät ein Leitungsheizgerät vorgesehen. Dieses Leitungsheizgerät erwärmt zumindest Teile des Rohrleitungssystems, welches im Servicegerät vom Speicherbehälter bis zum Anlagenraum der zu befüllenden Schaltanlage verläuft. Dabei kann das Leitungsheizgerät auch so gestaltet sein, dass es zusätzlich oder alternativ Elemente in der Rohrleitung erwärmt. Derartige Elemente können beispielsweise Filtergehäuse, Druckreduzierer, Ventile, Kupplungen oder Ähnliches sein. Aufgabe eines derartigen Leitungsheizgerätes ist es sicherzustellen, dass das im Speicherbehälter auf eine Temperatur oberhalb der kritischen Temperatur aller seiner Komponenten erwärmte Isoliergas nicht auf seinem Weg in Richtung Schaltanlage auf eine Temperatur unterhalb der kritischen Temperatur aller Komponenten abkühlt. Ein Abkühlen des Isoliergases auf eine Temperatur unterhalb dieses kritischen Punktes könnte dabei wieder zu einer Verflüssigung einzelner Komponenten führen, was wiederum eine Veränderung des Mischungsverhältnis der Komponenten des Isoliergases zur Folge hätte und vermieden werden soll. Es ist beispielsweise möglich, auf dem Weg vom Speicherbehälter zum Anlagenraum mehrere Temperatursensoren vorzusehen, welche die aktuelle Temperatur des Isoliergases an eine Steuerung melden. Wird dabei festgestellt, dass die Temperatur in die Nähe einer kritischen Temperatur abfällt, wird das Leitungsheizgerät aktiviert und so die Temperatur des Isoliergases wieder erhöht. Es ist selbstverständlich auch möglich mehrere Leitungsheizgeräte vorzusehen, was beispielsweise unter kalten Klimabedingungen von Vorteil ist. Weiterhin ist es möglich die verbindenden Rohrleitungen an sich heizbar zu gestalten.

Geschickter Weise ist vorgesehen, dass eine Steuerung vorgesehen ist, welches den Arbeitspunkt des Kompressors und/oder Kühlers in Abhängigkeit von mindestens einem, von einem Sensor gemessenen aktuellen Parameter des Isoliergases regelt und/oder die Steuerung den Arbeitspunkt des Speicherheizgerätes in Abhängigkeit von mindestens einem, von einem Sensor gemessenen aktuellen Parameter des Isoliergases regelt. In dieser Ausgestaltung der Erfindung ist eine Steuerung im Servicegerät vorgesehen, welches verschiedene Regelungsaufgaben übernimmt. Eine solche Steuerung regelt beispielsweise den Arbeitspunkt des Kompressors bei der Entnahme des Isoliergases aus dem Anlagenraum. Als Eingangsgröße für die Regelung des Kompressors wird dabei mindestens ein Parameter des mehrkomponentigen Isoliergases verwendet. Dieser mindestens eine Parameter wird dabei von einem oder mehreren Sensoren erfasst und über Signalleitungen an die Steuerung übermittelt. Selbstverständlich ist es auch möglich mehrere Parameter des Isoliergases als Eingangsgrößen für eine Regelung einzusetzen. Mögliche Parameter sind dabei Druck, Temperatur, Dichte, Durchflussmenge oder Ähnliches. Dabei können die ermittelten Parameter auch zur Regelung des Arbeitspunktes des dem Kompressor nachgeschalteten Kühlers verwendet werden. Besonders vorteilhaft an einer derartigen Regelung ist, dass die Arbeitspunkte von Kompressor und/oder Kühler stets an die aktuell gemessenen Parameter angeglichen werden. So ist sichergestellt, dass das Mischungsverhältnis der einzelnen Komponenten des Isoliergases auch dann konstant gehalten wird, wenn sich Umgebungsbedingungen, wie beispielsweise die Außentemperatur, ändern. Durch die Regelung werden alle Arbeitspunkte kontinuierlich und optimal an die Umgebungsbedingungen angepasst und was für eine sichere und stabile Funktion des Servicegerätes sorgt. In gleicher Weise kann auch ein Speicherheizgerät mithilfe einer Steuerung in seinem Arbeitspunkt geregelt werden. Das Speicherheizgerät dient dazu, das Isoliergas im Speicherbehälter auf eine Temperatur oberhalb der kritischen Temperatur aller Komponenten zu erhitzen. Dieses Erhitzen kann besonders günstig mithilfe eines Regelkreises erfolgen, indem ein oder mehrere Temperatursensoren im Speicherbehälter vorgesehen sind und eine Steuerung die Heizleistung bzw. den Arbeitspunkt des Speicherheizgerätes in Abhängigkeit der von den Temperatursensoren ermittelten Daten regelt. Selbstverständlich ist es auch möglich, weitere Komponenten oder Aggregate des Servicegerätes an die Steuerung anzuschließen und somit weitere Regelkreise auszubilden. Zusätzlich ist es möglich, Komponenten an die Steuerung anzuschließen, die lediglich gesteuert werden. Dies könnten beispielsweise Ventile sein, für die kein eigener Sensor zur Rückführung von Ist-Informationen vorgesehen ist.

Des Weiteren ist vorgesehen, dass eine Evakuierpumpe vorgesehen ist, die der Evakuierung des Anlagenraumes dient. In dieser Ausführungsform der Erfindung ist eine Evakuierpumpe vorgesehen, welche den Anlagenraum der elektrischen Schaltanlage vor der Befüllung mit Isoliergas evakuiert. Darunter ist zu verstehen, dass diese Evakuierpumpe die Luft aus dem Anlagenraum entfernt. Die Isolationseigenschaften von Luft sind signifikant schlechter als die von Isoliergas. Würde die Luft vor der Befüllung mit Isoliergas im Anlagenraum verbleiben, würde sie das eingefüllte Isoliergas verdünnen und so dessen Isolationseigenschaften verschlechtern. Die Evakuierpumpe erzeugt daher im Anlagenraum zunächst ein Vakuum, so dass kein oder nur ein sehr geringer Anteil an Luft darin verbleibt. Anschließend wird mithilfe des Servicegerätes das Isoliergas in den Anlagenraum befüllt. Die Evakuierpumpe ist dabei so im Servicegerät angeordnet, dass ein Teil des Rohrleitungssystems des Servicegerätes durch Ventile so abgeriegelt werden kann, das die evakuierte Luft ausschließlich den Weg zur Evakuierpumpe nehmen kann und nicht in Richtung Kompressor, Kühler oder Speicherbehälter fließen kann. Nach dem Evakuiervorgang kann im Rohrleitungssystem des Servicegerätes der Weg zur Evakuierpumpe mithilfe von Ventilen wieder verschlossen werden, so dass während der Befüllung der Schaltanlage mit Isoliergas kein Zugang mehr zur Evakuierpumpe besteht.

Vorteilhafter Weise ist vorgesehen, dass eine insbesondere trockenlaufende, ölfreie Vakuumpumpe vorgesehen ist, die in Strömungsrichtung des Isoliergases vor dem Kompressor angeordnet ist. In dieser Ausführungsform ist eine Vakuumpumpe vorgesehen, die zur Absaugung des Isoliergases aus dem Anlagenraum dient. Diese Vakuumpumpe ist zwischen Anlagenraum und Kompressor angeordnet und befindet sich somit in Strömungsrichtung des Isoliergases vor dem Kompressor. Bei der Entnahme des Isoliergases aus dem Anlagenraum ist es wichtig, dass das Isoliergas möglichst komplett aus dem Anlagenraum der elektrischen Schaltanlage entfernt wird. Dies ist zum einen erforderlich für den Schutz des Servicepersonals, da gebrauchtes Isoliergas gesundheitsschädliche Abbauprodukte enthalten kann, mit denen die mit dem Service beauftragten Personen nicht in Kontakt kommen sollten. Zum anderen hat ein komplettes Entfernen des Isoliergases aus dem Anlagenraum wirtschaftliche Vorteile, da das gleiche, vollständig entfernte Isoliergas nach dem Service wieder in die Anlage zurück befüllt werden kann und somit kein neues Isoliergas verwendet werden muss. Eine dem Kompressor vorgeschaltete Vakuumpumpe bietet den Vorteil, dass ein größerer Unterdruck zur Absaugung des Isoliergases erzeugt werden kann, als es mit dem Kompressor alleine möglich wäre. Die Vakuumpumpe ist technisch so ausgelegt, dass sie einen möglichst großen Unterdruck auf der Ansaug- oder Eingangsseite entwickelt. Der Ausgangsdruck der Vakuumpumpe ist dagegen auf eine möglichst optimale Funktion des Kompressors ausgelegt und somit an dessen optimalen Ansaugdruck angepasst. Der Kompressor kann somit optimal für seine eigentliche Aufgabe, nämlich der Kompression des Isoliergases verwendet werden. Das Vorsehen einer Vakuumpumpe ist vorteilhaft als Funktionsteilung bei der Entnahme des Isoliergases aus dem Anlagenraum. Die Vakuumpumpe sorgt für eine möglichst rückstandslose Entnahme des Isoliergases aus dem Anlagenraum, der Kompressor sorgt anschließend für eine optimale Kompression des Isoliergases, die wichtig für eine sichere und platzsparende Lagerung des Gases ist. Besonders vorteilhaft ist dabei das Vorsehen einer trockenlaufenden, ölfreien Vakuumpumpe. Eine trockenlaufende Vakuumpumpe stellt sicher, dass das Isoliergas beim Absaugvorgang aus dem Anlagenraum nicht durch Schmierstoffe der Vakuumpumpe verunreinigt wird, sondern ohne Veränderung seiner Zusammensetzung zum Kompressor gelangt.

Bei einer bevorzugten Ausgestaltung des Vorschlags ist vorgesehen, dass ein Filter vorgesehen ist, der in Strömungsrichtung des Isoliergases vor der Vakuumpumpe angeordnet ist. In dieser Ausführungsform ist ein Filter zwischen Anlagenraum und Vakuumpumpe angeordnet. Dieser Filter dient dazu, Verunreinigungen im Isoliergas, die während bzw. durch den Betrieb der elektrischen Schaltanlage entstehen können, aus dem Isoliergas zu entfernen. Dadurch ist sichergestellt, dass diese Verunreinigungen in der Vakuumpumpe und auch in den folgenden Aggregaten wie Kompressor oder Kühler keine Beschädigungen hervorrufen können.

Des Weiteren ist günstiger Weise vorgesehen, dass ein Trocknungsfilter und/oder ein Partikelfilter vorgesehen ist/sind, wobei dieser/diese Filter in Strömungsrichtung nach dem Kompressor angeordnet ist/sind. In dieser Ausführungsform sind ein oder mehrere Filter in Strömungsrichtung nach dem Kompressor angeordnet. Diese Filter können verschiedenartig beschaffen sein. So kann beispielsweise ein Trocknungsfilter vorgesehen werden, der Feuchtigkeit aus dem Isoliergas entfernt.

Ergänzend oder alternativ dazu kann ein Partikelfilter vorgesehen sein, der Partikel aus dem strömenden Isoliergas entfernt. Die in Strömungsrichtung nach dem Kompressor und Kühler angeordneten Filter dienen dazu, unerwünschte Stoffe aus dem abgesaugten, gebrauchten Isoliergas vor dessen Zwischenlagerung im Speicherbehälter zu entfernen. Durch diese Reinigung des Isoliergases während des Absaugvorganges aus dem Anlagenraum wird gewährleistet, dass das im Speicherbehälter gespeicherte Gas ohne weitere Reinigungsschritte wieder in den Anlagenraum einer elektrischen Schaltanlage eingebracht werden kann und dort wieder eine sichere Funktion des Gases als Isoliergas sichergestellt ist.

In einer weiteren bevorzugten Ausführungsform ist vorgesehen, dass eine Wiegeeinrichtung vorgesehen ist, die das aktuelle Gewicht der Gasflasche bestimmt. Eine derartige Wiegeeinrichtung ermittelt das aktuelle Gewicht der Gasflasche und damit indirekt die Masse des sich in der Gasflasche befindlichen Isoliergases. Über diese Masse des Isoliergases kann dann wiederum die Menge des gespeicherten Isoliergases bestimmt werden. Die Kenntnis, wie viel Isoliergas sich in der Gasflasche befindet kann beispielsweise dazu verwendet festzustellen, wann die Aufnahmekapazität der Gasflasche erreicht ist. Weiterhin kann festgestellt werden, ob noch ausreichend Isoliergas für die Befüllung des Anlagenraumes einer elektrischen Schaltanlage in der aktuell angeschlossenen Gasflasche vorhanden ist. Besonders günstig ist eine Anbindung der Wiegeeinrichtung an die Steuerung des Servicegerätes. Eine derartige Anbindung könnte beispielsweise über eine Sensorleitung oder aber auch über eine Funkverbindung erfolgen. Die von der Wiegeeinrichtung zur Verfügung gestellten Informationen über das aktuelle Gewicht der Gasflasche können dann von der Steuerung auch zur Regelung eines Flaschenheizgerätes verwendet werden. Ein solches Flaschenheizgerät ist in seiner Funktion analog zu dem bereits beschriebenen Speicherheizgerät und dient zur Erwärmung des in der Gasflasche befindlichen Isoliergases auf eine Temperatur oberhalb der kritischen Temperatur aller Komponenten des Isoliergases. Es ist selbstverständlich auch möglich, eine Wiegeeinrichtung an einem fest am oder im Servicegerät installierten Speicherbehälter vorzusehen und in gleicher Weise zu nutzen, wie es im Zusammenhang mit der Wiegeeinrichtung für eine Gasflasche beschrieben wurde.

Die Aufgabe der Erfindung wird auch gelöst durch ein Verfahren zur Entnahme eines mehrkomponentigen Isoliergases aus einem Anlagenraum nach Anspruch 8.

Das Verfahren zur Entnahme eines mehrkomponentigen Isoliergases aus dem Anlagenraum, insbesondere bei der Wartung von elektrischen Schaltanlagen, und zur Wiederbefüllung des Anlagenraums mit einem mehrkomponentigen Isoliergas ist gekennzeichnet durch die Abfolge folgender Schritte:
- Entnahme des Isoliergases aus dem Anlagenraum,
- Komprimierung des Isoliergases in einem Kompressor, wobei der Kompressor so betrieben wird, dass alle Komponenten innerhalb des Kompressors in der gasförmigen Phase verbleiben,
- Kondensierung zumindest des Großteils des komprimierten Isoliergases in einem Speicherbehälter,
- Speicherung des flüssigen Isoliergases in dem Speicherbehälter
- Erwärmung des Isoliergases in dem Speicherbehälter auf eine Temperatur oberhalb der kritischen Temperatur aller Komponenten des Isoliergases vor der Befüllung des Anlagenraumes,
- und Transport des gasförmigen Isoliergases, insbesondere durch den Kompressor in den Anlagenraum.

Ein erfindungsgemäßes Verfahren wird vorgeschlagen, um ein aus mehreren Komponenten bestehendes Isoliergas aus einem Anlagenraum zunächst zu entnehmen und in flüssiger Form in einem Speicherbehälter (zwischen-) zu speichern. Ein erfindungsgemäßes Verfahren wird dabei bevorzugt bei der Wartung von elektrischen Schaltanlagen eingesetzt, um das Isoliergas vor der Wartung aus dem Anlagenraum zu entfernen und für eine Wiederbefüllung nach der Wartung zwischenzuspeichern. Das Verfahren umfasst dabei mehrere Schritte. Zunächst wird das Isoliergas aus dem Anlagenraum der elektrischen Schaltanlage entnommen. Zur Entnahme des Isoliergases kann dabei beispielsweise eine Vakuumpumpe eingesetzt werden. Bei der Entnahme des Isoliergases ist es besonders günstig, das Gas möglichst komplett und rückstandsfrei aus dem Anlagenraum zu entnehmen. So ist sichergestellt, dass kein zurückbleibendes Isoliergas bei der Wartung des Anlagenraumes stört. Darüber hinaus geht auch kein Isoliergas verloren, so dass bei der Wiederbefüllung des Anlagenraumes kein neues Isoliergas beschafft werden muss. In einem nächsten Schritt des Verfahrens wird das entnommene Isoliergas komprimiert. Für diese Komprimierung wird ein Kompressor eingesetzt, der so betrieben wird, dass alle Komponenten des Isoliergases während des kompletten Kompressionsvorgangs in der gasförmigen Phase verbleiben. Dieses Verbleiben in der gasförmigen Phase hat Vorteile beim Betrieb des Kompressors. Würden bei dessen Betrieb durch die Druckerhöhung Teile des Isoliergases in die flüssige Phase übergehen, müssten diese verflüssigten Komponenten kontinuierlich aus dem Kompressor entfernt werden. Dieses Entfernen der flüssigen Komponenten soll vermieden werden, da es einen technischen und damit auch finanziellen Aufwand darstellt. Weiterhin hätte das Verflüssigen einzelner Komponenten des Isoliergases im Kompressor zur Folge, dass sich das Mischungsverhältnis der Komponenten untereinander ändert. Die verflüssigten Komponenten würden im Kompressor verbleiben und nur die gasförmigen Komponenten würden weiter in Richtung der nächsten Verfahrensschritte transportiert werden. Für die isolierende Funktion des Isoliergases in der elektrischen Schaltanlage ist aber genau dieses Mischungsverhältnis der einzelnen Komponenten zueinander von essenzieller Bedeutung. Dadurch, dass der Kompressor so betrieben wird, dass alle Komponenten des Isoliergases in der gasförmigen Phase verbleiben ist sichergestellt, dass das Mischungsverhältnis der Komponenten zueinander während des Kompressionsvorgangs konstant bleibt und sich so die elektrischen Eigenschaften des Isoliergases nicht ändern. In einem weiteren Verfahrensschritt wird zumindest der Großteil des komprimierten Isoliergases in einem Speicherbehälter kondensiert. Das Isoliergas wird bis zu einem Speicherbehälter in der gasförmigen Phase transportiert. Erst in dem Speicherbehälter wird das Isoliergas dann mit all seinen Komponenten kondensiert. Diese Kondensation erfolgt über eine Reduzierung der Temperatur des Isoliergases. Es ist dabei möglich, dass ein kleinerer Teil des Isoliergases bereits im letzten Stück der Rohrleitung vor dem Speicherbehälter kondensiert. Auch in diesem Fall tritt keine Veränderung des Mischungsverhältnis ist der einzelnen Komponenten des Isoliergases zueinander auf, da das Rohrleitungssystem vor dem Speicherbehälter so gestaltet ist, dass darin verflüssigten Teile oder Komponenten des Isoliergases ebenfalls in den Speicherbehälter geführt werden und sich dort dann wieder mit dem übrigen, ebenfalls verflüssigten Teilen bzw. Komponenten vermischen.

In einem weiteren Verfahrensschritt wird das nun in flüssiger Form vorliegende Isoliergas in dem Speicherbehälter gespeichert. Eine Speicherung in flüssiger Form hat den Vorteil, dass wesentlich weniger Platz für die Speicherung der gleichen Menge an Isoliergas benötigt wird als es gasförmigen Zustand der Fall wäre. Das gespeicherte Isoliergas kann anschließend entweder nach durchgeführter Wartung in die gleiche elektrische Schaltanlage zurück befüllt werden oder aber im Speicherbehälter transportiert und an anderer Stelle eingesetzt werden.

Mit Hilfe des erfindungsgemäßen Verfahrens wird anschließend ein aus mehreren Komponenten bestehendes Isoliergas in den Anlagenraum einer elektrischen Schaltanlage befüllt. Ausgangspunkt ist dabei das in einem Speicherbehälter unter Druck in flüssiger Form vorliegende, gespeicherte Isoliergas. Das erfindungsgemäße Verfahren ist besonders geeignet zur Wiederbefüllung eines Anlagenraumes nach einer Wartung. Selbstverständlich kann das Verfahren auch zur Erstbefüllung nach der Herstellung der Schaltanlage eingesetzt werden. In einem ersten Verfahrensschritt des Befüllvorganges wird das Isoliergas im Speicherbehälter erwärmt. Die Erwärmung erfolgt dabei bis zu einer Temperatur, die oberhalb der kritischen Temperatur aller Komponenten des Isoliergases liegt. Die kritische Temperatur bezeichnet dabei diejenige Temperatur, oberhalb derer ein Gas nicht mehr in die flüssige Phase übergeht. Ein auf eine Temperatur oberhalb der kritischen Temperatur erhitztes Gas geht auch bei hohen Drücken nicht mehr in die flüssige Phase über. Durch die Erhitzung des Isoliergases auf eine Temperatur oberhalb der kritischen Temperatur sämtlicher Komponenten ist sichergestellt, dass sich während des Befüllungsvorganges des Anlagenraumes, bei dem Druckunterschiede auftreten können, keine der Komponenten wieder verflüssigt. Es ist somit sichergestellt, dass das Mischungsverhältnis der einzelnen Komponenten des Isoliergases zueinander während des Befüllungsvorganges konstant bleibt. In einem weiteren Verfahrensschritt wird das auf eine überkritische Temperatur erwärmte, gasförmige Isoliergas in den Anlagenraum einer elektrischen Schaltanlage transportiert. Zur Erzeugung des für diesen Transport benötigten Druckes ist insbesondere ein Kompressor geeignet. Dieser Transport des Isoliergases zum Anlagenraum erfolgt dabei ausschließlich in der gasförmigen Phase. Falls es die Umgebungsbedingungen erforderlich machen, können Teile des Rohrleitungssystems oder der von dem Isoliergases auf seinem Weg durchflossenen Aggregate mit einer Heizung versehen werden, die sicherstellt, dass das Isoliergas auf seinem Weg nicht auf unterkritische Temperaturen abkühlt. Durch den Transport des Isoliergases bei einer Temperatur oberhalb der kritischen Temperatur aller seiner Komponenten wird sichergestellt, dass das Mischungsverhältnis der Komponenten zueinander während des Transportes konstant bleibt. Dadurch ist ebenfalls sichergestellt, dass die elektrischen Eigenschaften des Isoliergases unverändert bleiben und eine sichere Funktion beim Betrieb in einer elektrischen Schaltanlage gewährleistet ist.

Bei einer bevorzugten Ausgestaltung des Vorschlags ist vorgesehen, dass das komprimierte Isoliergas in einem in Fließrichtung dem Kompressor nachgeschalteten Kühler derart gekühlt wird, dass in dem Kühler möglichst kein Bestandteil des Isoliergases kondensiert. In dieser Ausführungsform eines erfindungsgemäßen Verfahrens ist vorgesehen, dass das während der Kompression im Kompressor aufgewärmte Isoliergas in einem, in Fließrichtung nach dem Kompressor befindlichen Kühler abgekühlt wird. Der Kühler wird dabei derart betrieben, dass durch die Abkühlung möglichst kein Bestandteil bzw. keine Komponente des Isoliergases kondensiert. Der Kühler hat dabei die Aufgabe die Temperatur nach der Kompression wieder zu reduzieren, da eine Kondensation des Isoliergases mit all seinen Komponenten in dem in der Nähe befindlichen Speicherbehälter erfolgen soll. Allerdings soll die Kondensation erst in dem Speicherbehälter erfolgen, nicht aber bereits im Kühler. Eine Kondensation im Kühler würde zu der bereits mehrfach beschriebenen Änderung des Mischungsverhältnisses der einzelnen Komponenten des Isoliergases zueinander führen. Eine derartige Änderung des Mischungsverhältnisses des Isoliergases soll daher durch den beschriebenen Arbeitspunkt des Kühlers, so weit es möglich ist, verhindert werden.

Geschickter Weise ist vorgesehen, dass das Isoliergas bei der Absaugung aus dem Anlagenraum in Fließrichtung vor dem Kompressor oder einer in Fließrichtung vorgesehenen Vakuumpumpe, einen Filter durchläuft. In dieser Ausführungsform eines Verfahrens ist ein Filterschritt vorgesehen, bei dem Verunreinigungen vor dem Passieren des Kompressors oder der Vakuumpumpe durch einen Filter entfernt werden. Dies ist besonders vorteilhaft, da so Beschädigungen des Kompressors oder der Vakuumpumpe durch Verunreinigungen im abgesaugten Isoliergas vermieden werden.

Vorteilhafter Weise ist vorgesehen, dass der Kompressor bei der Verdichtung des Isoliergases von einer Steuerung so geregelt wird, dass alle Komponenten des Isoliergases während des Kompressionsprozesses in der gasförmigen Phase verbleiben. In dieser Ausführungsform eines Verfahrens wird eine Steuerung eingesetzt, die kontinuierlich und angepasst an die Umgebungsbedingungen den Arbeitspunkt des Kompressors so regelt, so dass alle Komponenten des Isoliergases während des gesamten Kompressionsprozesses in der gasförmigen Phase verbleiben. Es ist dabei möglich, dass die Steuerung zur Regelung des Kompressors auf verschiedene Informationen zurückgreift, die von Sensoren zur Verfügung gestellt werden. Der Arbeitspunktes Kompressors wird dann so geregelt, dass zu jedem Zeitpunkt gewährleistet ist, dass alle Komponenten während der Kompression gasförmig bleiben. Eine derartige Regelung ist in der Lage Veränderungen, beispielsweise durch veränderte Umgebungsbedingungen auszugleichen. So ist sichergestellt das zu jedem Zeitpunkt eine Verflüssigung eines oder mehrerer Komponenten des Isoliergases während der Kompression vermieden wird. Dadurch wird das Isoliergas im erforderlichen Maß komprimiert ohne dass dessen elektrische Eigenschaften durch die Kompression verändert werden.

Des Weiteren ist günstiger Weise vorgesehen, dass das Gewicht der Gasflasche während des Erwärmens des darin befindlichen Isoliergases mit Hilfe einer Wiegeeinrichtung gemessen und der Messwert der Steuerung zugeführt wird. In dieser Ausführungsform wird das Gewicht der Gasflasche und damit indirekt auch des Gewicht des darin enthaltenen Isoliergases mithilfe einer Wiegeeinrichtung gemessen. Der gemessene Wert wird dann der Steuerung zugeführt und darin beispielweise als Eingangsinformation für die Regelung der Flaschenheizung verwendet. Das Gewicht des sich in der Gasflasche befindlichen Isoliergases gibt darüber hinaus Aufschluss über die Menge an Isoliergas, die noch zur Befüllung des Anlagenraumes zur Verfügung steht. So kann beispielsweise erkannt werden, ob bis zum Abschluss der Befüllung des Anlagenraumes noch eine weitere Gasflasche mit Isoliergas benötigt wird oder nicht.

Des Weiteren ist günstiger Weise vorgesehen, dass das vor dem Transport des überkritisch erwärmten Isoliergases in den Anlagenraum die Luft aus dem Anlagenraum mit Hilfe einer Evakuierpumpe abgesaugt wird. In dieser Ausführungsform eines Verfahrens wird vor dem Transport des Isoliergases in den Anlagenraum die dort befindliche Luft entfernt. Für diese Evakuierung des Anlagenraumes wird eine Evakuierpumpe eingesetzt. Die Entfernung der Luft aus dem Anlagenraum vor der Befüllung mit dem Isoliergas dient dazu, möglichst optimale Isoliereigenschaften des Isoliergases in der Anlage zu erreichen. Luft hat eindeutig schlechteres Isolierverhalten als das mehrkomponentige Isoliergas. Würde vor der Befüllung mit Isoliergas Luft im Anlagenraum verbleiben, würden sich diese Luft und das Isoliergas bei der Befüllung mischen. Die Folge dieser Verdünnung des Isoliergases wären wesentlich schlechtere elektrische Isolationseigenschaften des Gasgemisches. Die Entfernung der Luft aus dem Anlagenraum liefert somit einen wichtigen Beitrag zur sicheren Funktion der elektrischen Schaltanlage nach der Wiederbefüllung mit Isoliergas.

Die Aufgabe der Erfindung wird auch gelöst durch die Verwendung eines Servicegerätes nach einer der beschriebenen Ausführungsformen, welches insbesondere zur Durchführung eines Verfahrens nach einer der beschriebenen Ausführungsformen dient, insbesondere bei der Wartung von Schaltanlagen, die mit einem Isoliergas befüllt sind, welches aus mehreren unterschiedlichen Komponenten besteht, wobei diese unterschiedlichen Komponenten unterschiedliche physikalische Eigenschaften, wie beispielsweise unterschiedliche kritische Punkte aufweisen. Die Verwendung eines Servicegerätes nach einer der beschriebenen Ausführungsformen ist besonders vorteilhaft bei oder für die Wartung einer gasisolierten Schaltanlage. In jüngerer Zeit hat sich bei solchen gasisolierten Schaltanlagen der Einsatz von Isoliergasen durchgesetzt, die aus mehreren Gasen oder Komponenten zusammengesetzt sind. Naturgemäß weisen unterschiedliche Gase auch unterschiedliche physikalische Eigenschaften wie beispielsweise Verflüssigungsdrücke, Verflüssigungstemperaturen oder kritische Temperaturen auf. Bei der Wartung von elektrische Schaltanlagen, die mit derartigen mehrkomponentigen Isoliergasen befüllt sind, muss sichergestellt werden, dass sich die Eigenschaften des Isoliergases durch Entnahme und Wiederbefüllung aus bzw. in den Anlagenraum keine Veränderungen der Eigenschaften des Isoliergases ergeben. Ein Servicegerät nach einer der beschriebenen Ausführungsformen hat sich für eine solche Verwendung als besonders vorteilhaft herausgestellt, da sich bei einem Einsatz eines solchen Gerätes keine Veränderungen in den Eigenschaften des Isoliergases durch den Wartungsvorgang ergeben. Ein Servicegerät dieser Art ist so konzipiert, dass im Verlauf des Transportes des mehrkomponentigen Isoliergases durch das Servicegerät alle Komponenten in der gasförmigen Phase verbleiben und so keine der Komponenten durch separate Verflüssigung aus der Gasmischung teilweise oder ganz entfernt wird. Diese Verflüssigung einzelner Komponenten führt bei der Verwendung von Servicegeräten, die auf das Handling von einkomponentigen Isoliergasen ausgelegt sind oft ungewollten Entmischungen, was besonders kritisch für die Funktion von Schaltanlagen ist, wenn diese Entmischungen nicht erkannt werden. Es ist selbstverständlich auch möglich, ein erfindungsgemäßes Servicegerät zur Wartung von Schaltanlagen zu verwenden, die ein Isoliergas bestehend aus lediglich einer Komponente enthält. Generell ist aber auch die Verwendung eines Servicegerätes nach einer der beschriebenen Ausführungsformen für das Handling von verschiedenartigen Gasmischungen geeignet, bei dem ein konstantes Mischungsverhältnis zwischen den einzelnen Komponenten der Gasmischung über den Handlingsprozess hinweg sichergestellt sein soll.

Bei einer bevorzugten Ausgestaltung des Vorschlags ist vorgesehen, dass das mehrkomponentige Isoliergas, mit dem die zu wartenden Schaltanlagen befüllt ist, kein SF6 (Schwefelhexafluorid) enthält und dieses Isoliergases zumindest eine Trägerkomponente aufweist, welche durch N₂ oder CO₂ gebildet wird. Bei dieser Verwendung eines Servicegerätes und Verfahrens enthält das bewegte Isoliergas kein Schwefelhexafluorid. Diese Verwendung ist besonders günstig für den Umweltschutz, da das bewegte Isoliergas in wesentlich geringerem Maße als Schwefelhexafluorid den Treibhauseffekt fördert und somit ungewollt entweichendes Gas wesentlich weniger Schaden erzeugt. Als Ersatz für Schwefelhexafluorid ist zumindest eine Trägerkomponente vorgesehen welche durch N₂ oder CO₂ gebildet wird. Ein solches mehrkomponentiges Isoliergas enthält neben der Trägerkomponente zumindest noch eine weitere Komponente.

Des Weiteren ist vorgesehen, dass das mehrkomponentige Isoliergas neben der Trägerkomponente eine Zusatzkomponente enthält, die aus C5-Keton, HF01234ze, HF01234yf, Fluoronitril oder einer Kombination dieser Gase gebildet ist. In dieser Ausführungsform einer Verwendung eines Service Gerätes und Verfahrens enthält ein mehrkomponentiges Isoliergas zusätzlich zur Trägerkomponente noch eine Zusatzkomponente die von zumindest einem der Isoliergase C5-Keton, HF01234ze, HF01234yf oder Fluoronitril gebildet wird. Selbstverständlich kann diese Zusatzkomponente auch aus einer Mischung oder Kombination der genannten Gase gebildet werden oder eine alternative Komponente mit günstigen Eigenschaften enthalten. Praktisch anwendbare Mischungsverhältnisse von Trägerkomponente und Zusatzkomponente sind weiter oben beschrieben.

In diesem Zusammenhang wird insbesondere darauf hingewiesen, dass alle im Bezug auf das Servicegerät beschriebenen Merkmale und Eigenschaften aber auch Verfahrensweisen sinngemäß auch bezüglich der Formulierung des erfindungsgemäßen Verfahrens bzw. der erfindungsgemäßen Verwendung übertragbar und im Sinne der Erfindung einsetzbar und als mitoffenbart gelten. Gleiches gilt auch in umgekehrter Richtung, das bedeutet, nur im Bezug auf das Verfahren oder der Verwendung genannte, bauliche also vorrichtungsgemäße Merkmale können auch im Rahmen der Ansprüche für das Servicegerät berücksichtigt und beansprucht werden und zählen ebenfalls zur Offenbarung. Analoges gilt auch zwischen dem erfindungsgemäßen Verfahren und der erfindungsgemäßen Verwendung.

In der Zeichnung ist die Erfindung insbesondere in einem Ausführungsbeispiel schematisch dargestellt. Es zeigen:

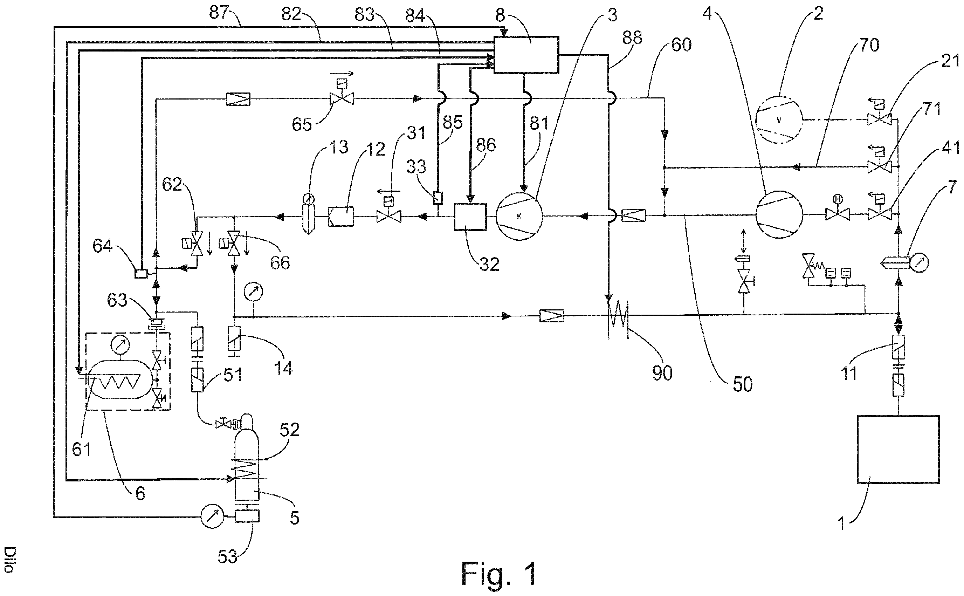

- Fig. 1: eine schematische Darstellung einer Ausführungsform eines Servicegerätes nach der Erfindung.

In Fig. 1 ist eine schematische Darstellung einer Ausführungsform eines Servicegerätes zu sehen. In der rechten unteren Ecke befindet sich der Anlagenraum 1 der Schaltanlage, welcher bei Betrieb der Schaltanlage mit einem mehrkomponentigen Isoliergas gefüllt ist. Die übrigen Elemente in Fig. 1 zeigen Teile oder Komponenten einer Ausführungsform eines Servicegerätes. Dabei kann dieses Servicegerät fest und dauerhaft mit der elektrischen Schaltanlage und dem Anlagenraum 1 verbunden sein oder das Servicegerät kann als mobiles Gerät ausgeführt seien, welches mit dem Anlagenraum 1 nur bei Bedarf oder bei der Wartung verbunden wird. In jedem Fall wird das Servicegerät über die Kupplung 11 mit dem Anlagenraum 1 verbunden. Diese Kupplung 11 kann dabei auf verschiedenste Arten ausgeführt sein. Denkbar sind Schnellkupplungen, die mithilfe einfach zu betätigender Schiebe-oder Drehelemente angeschlossen oder voneinander getrennt werden. Darüber hinaus sind Flanschverbindungen möglich, die geschraubt, geschweißt oder anderweitig miteinander verbunden und abgedichtet werden. Die Auswahl einer geeigneten Kupplung 11 hängt davon ab, ob es sich bei dem Servicegerät um ein fest installiertes Gerät oder ein mobiles Gerät handelt. Bei einem mobilen Gerät sind aus Gründen der Bedienfreundlichkeit Schnellkupplungen zu bevorzugen.

Zur besseren Verständlichkeit der folgenden Beschreibung des Servicegerätes werden Begrifflichkeiten für drei unterschiedliche Wege des Isoliergases durch das Servicegerät eingeführt. Auf einem Entnahmeweg 50 wird das Isoliergas aus dem Anlagenraum 1 entnommen und zur Zwischenlagerung in den Speicherbehälter 6 oder die Glasflasche 5 überführt. Auf dem Rückführungsweg 60 wird das Isoliergas dann andersherum vom Speicherbehälter 6 bzw. der Gasflasche 5 zurück in den Anlagenraum 1 der Schaltanlage transportiert. Der Umgehungsweg 70 hat die gleiche Funktion und weit gehend den gleichen Verlauf wie der Entnahmeweg 50, allerdings wird auf dem Umgehungsweg 70 die Vakuumpumpe 4 umgangen.

Der Entnahmeweg 50 beginnt bei der Kupplung 11 und verläuft zunächst nach oben durch den Filter 7 und das Ventil 41 zur Vakuumpumpe 4. Die Vakuumpumpe 4 dient dazu, durch Erzeugung eines starken Unterdruckes das Isoliergas nahezu restlos aus dem Anlagenraum 1 abzusaugen. Für eine qualitativ hochwertige Wartung einer Schaltanlage ist es wichtig, das darin befindliche Isoliergas möglichst komplett zu entfernen, wobei das Isoliergas möglichst nicht in die Umgebung entweichen sollte. Die Vakuumpumpe 4 hat somit zum einen die Aufgabe den Anlagenraum 1 möglichst rückstandslos zu entleeren, zum anderen hat die Vakuumpumpe 4 die Aufgabe auf ihrer Ausgangsseite einen geeigneten Arbeitsdruck zur Verfügung zu stellen, der einen Weitertransport des Isoliergases zum Kompressor 3 ermöglicht. Zwischen Anlagenraum 1 und Vakuumpumpe 4 befindet sich ein erster Filter 7. Das Isoliergas wird beim Betrieb der Schaltanlage durch diverse Vorgänge chemisch verändert und dabei verunreinigt. Zu diesen Vorgängen, die zu Veränderungen des Isoliergases führen, gehören beispielsweise Lichtbögen, die bei Schaltvorgängen kurzzeitig entstehen. Diese Lichtbögen wirken thermisch und elektrisch auf das Isoliergas ein und können teilweise giftige Abbauprodukte erzeugen. Deshalb wird das Isoliergas bei der Wartung der Schaltanlage mehrfach gefiltert wodurch Veränderungen und Abbauprodukte aus dem Isoliergas entfernt werden. Der Filter 7 stellt eine erste Filterstufe zur Reinigung des Isoliergases vor dem Eintritt in die Vakuumpumpe 4 dar. Auf dem Entnahmeweg 50 verlässt das Isoliergas die Vakuumpumpe 4 auf der linken Seite und gelangt als nächstes in den Kompressor 3. Dort wird das Isoliergas dann verdichtet um eine platzsparende Lagerung während der Wartung der Schaltanlage zu ermöglichen. Wie weiter oben beschrieben wurde sind moderne Isoliergase, deren Treibhauseffekt wesentlich geringer ist als die Erde seit langem etablierten SF6 aus mehreren Komponenten aufgebaut. Bei einem derartigen Aufbau aus mehreren Komponenten besteht die Gefahr, dass zunächst eine der Komponenten bei steigendem Druck im Kompressor von der gasförmigen in die flüssige Phase übergeht, wogegen die restlichen Komponenten des Isoliergases noch in der gasförmigen Phase verbleiben. Ein derartiges zeitlich bzw. auch räumlich zueinander versetzt erfolgender Übergang der einzelnen Komponenten in die flüssige Phase würde zu einer Veränderung des Mischungsverhältnisses der einzelnen Komponenten zueinander führen. Die zuerst verflüssigenden Komponenten würden der Gasmischungen quasi verloren gehen und im Kompressor verbleiben, wogegen die restlichen Komponenten gasförmig weiter auf dem Entnahmeweg 50 transportiert werden würden. Zur Lösung dieses Problems wird der Kompressor 3 der Art betrieben, dass eine Druckerhöhung des Isoliergases nur soweit erfolgt, dass sich immer alle Komponenten beim Verlassen des Kompressors 3 immer noch im gasförmigen Zustand befinden. Der Ausgangsdruck des Kompressors 3 ist daher so eingestellt, dass er unterhalb des Verflüssigungsdruckes derjenigen Komponente liegt, die den geringsten Verflüssigungsdruck aller Komponenten aufweist. Das Isoliergas verlässt den Kompressor 3 daher komplett gasförmig und tritt als nächstes in den Kühler 32 ein.

Im Kühler 32 wird das im Kompressor 3 beim Kompressionsvorgang aufgeheizte Isoliergas wieder abgekühlt. Der Kühler 32 wird dabei so betrieben, dass sich alle Komponenten des Isoliergases am Ausgang des Kühlers 32 immer noch im gasförmigen Zustand befinden. Allerdings wird durch den Kühlvorgang die Gasmischung in die Nähe des Verflüssigungspunktes, nämlich einer Kombination aus der kritischen Temperatur und dem kritischen Druck, gebracht. Im weiteren Verlauf des Entnahmeweges 50 passiert das Isoliergas das Ventil 31 sowie den Trockenluftfilter 12 und den Partikelfilter 13. Nach dem Passieren des nach dem Partikelfilter 13 angeordneten Ventils 62 gelangt das Isoliergas schließlich über die Anschlusskupplung 63 in den Speicherbehälter 6. Alternativ kann das Isoliergas über eine Flaschenkupplung 51 in eine Gasflasche 5 geleitet werden. Die Temperaturen und Drücke auf dem Entnahmeweg 50 sind so eingestellt und geregelt, dass eine Verflüssigung des Isoliergases erst im Speicherbehälter 6 oder der Gasflasche 5 erfolgt. Die Verflüssigung im Speicherbehälter 6 oder der Gasflasche 5 erfolgt dann durch eine dort im Vergleich zur Rohrleitung des Entnahmeweges nochmals leicht reduzierte Temperatur. Eine Lagerung bzw. eine Zwischenlagerung des mehrkomponentigen Isoliergases in flüssiger Form bietet eine enorme Platzersparnis gegenüber der Lagerung im gasförmigen Zustand.

Der Transport des Isoliergases in gasförmigem Zustand auf dem Entnahmeweg 50 und eine anschließende Verflüssigung des mehrkomponentigen Isoliergases im Speicherbehälter 6 oder einer Gasflasche 5 bietet eine sehr große Sicherheit gegen eine ungewollte Veränderung des Mischungsverhältnisses der einzelnen Komponenten des Isoliergases bei gleichzeitiger, platzsparender Lagerung in flüssigem Zustand. Die Steuerung 8 hat die Aufgabe, die einzelnen Bauteile bzw. Aggregate des Servicegerätes so zu regeln, dass das Isoliergas in allen Teilen der Anlage den gewünschten Zustand aufweist. An die Steuerung 8 sind mehrere Sensoren angeschlossen, die in Fig. 1 über Pfeile, die in Richtung Steuerung 8 weisen dargestellt sind. Weiterhin weist die Steuerung 8 mehrere Stellgrößen auf, die als Pfeile, die in Richtung der entsprechenden zu stellenden Komponente weisen dargestellt sind. Auf dem Entnahmeweg 50 ist nach dem Kühler 32 ein Zustandssensor 33 vorgesehen und über die Sensorleitung 85 mit der Steuerung 8 verbunden. Dieser Zustandssensor 33 ermittelt Druck und/oder Temperatur und/oder den Aggregatzustand des Isoliergases nach dem Verlassen des Kühlers 32. Die Steuerung 8 verwendet dann die Informationen des Zustandssensors 33 zur Regelung des Kompressors 3 und des Kühlers 32. Dazu ist die Steuerung 8 über die Stellleitungen 81 bzw. 86 mit den Aggregaten verbunden. Es wäre hier auch möglich weitere Zustandssensoren auf dem Entnahmeweg 50 vorzusehen. So könnte beispielsweise zwischen dem Kompressor 3 und dem Kühler 32 ein weiterer Zustandssensor angebracht werden, um das Isoliergas beim Verlassen des Kompressors 3 analysieren zu können. Ein weiterer Zustandssensor 64 ist auf dem Entnahmeweg vorgesehen, der den Zustand des Isoliergases auf seinem Weg vom Kühler 32 zum Speicherbehälter 6 nach dem passieren des Ventils 31, des Trockenfilters 12, des Partikelfilters 13 und des Ventils 62 bestimmt. Die Informationen, die der Zustandssensor 64 liefert, fließen ebenfalls in die durch die Steuerung 8 erfolgende Regelung von Kompressor 3 und Kühler 32 ein.

Die Steuerung ist auch mit den Ventilen des Servicegerätes, beispielsweise den Ventilen 31 und 62 verbunden. Die Steuerung kann dabei erkennen, in welchem Zustand sich die Ventile befinden, insbesondere ob sie geöffnet oder geschlossen sind, und kann auch den Zustand der Ventile ändern. Aus Gründen der Übersichtlichkeit sind die Sensor- und Stellleitungen zwischen Steuerung 8 und den Ventilen in Fig. 1 nicht dargestellt.

Nach der Durchführung von Wartungsarbeiten an der Schaltanlage bzw. am Anlagenraum 1 wird das Isoliergas mithilfe des Servicegerätes wieder in den Anlagenraum 1 transportiert. Bei diesem Rücktransport wird das Isoliergas von seinem flüssigen Lagerzustand wieder zurück in den gasförmigen Betriebszustand für den Einsatz in der Schaltanlage umgewandelt. Auch bei dieser Umwandlung und auf dem Transport durch das Servicegerät ist es besonders wichtig, dass sich das Mischungsverhältnis der einzelnen Komponenten des Isoliergases zueinander nicht verändert. Zu Beginn der Rückführung des Isoliergases in den Anlagenraum 1 wird die Gasmischungen im Speicherbehälter 6 oder einer Gasflasche 5 auf eine Temperatur erwärmt, die oberhalb der Verdampfungstemperatur sämtlicher Komponenten des Isoliergases liegt. Das Isoliergas wird also bereits im Speicherbehälter 6 oder der Gasflasche 5 in den gasförmigen Zustand zurücküberführt. Zur Erhöhung der Temperatur sind das Speicherheizgerät 61 und/oder das Flaschenheizgerät 52 vorgesehen. Diese Heizgeräte werden über die Stellleitungen 82 und 83 von der Steuerung 8 geregelt. Zusätzlich sind Sensoren und Sensorleitungen zur Ermittlung der aktuellen Temperatur vorgesehen, die in Fig. 1 aus Gründen der Übersichtlichkeit nicht dargestellt sind. Zur Ermittlung des aktuellen Gewichts der Gasflasche 5, und damit indirekt zur Ermittlung des Gewichts des in der Gasflasche 5 befindlichen Isoliergases ist die Wiegeeinheit 53 vorgesehen. Diese Wiegeeinheit 53 ist mit der Steuerung 8 über die Sensorleitung 87 verbunden. Die Steuerung 8 verwendet die von der Wiegeeinrichtung 53 ermittelten Informationen zur Regelung des Flaschenheizgerätes 52.

Das Isoliergas wird bei der Rückführung in den Anlagenraum 1 auf dem Rückführungsweg 60 durch das Servicegerät geführt. Vor der Rückführung des Isoliergases werden die Ventile 62, 71, 41 und 21 geschlossen um den Rückführungsweg 60 zu öffnen und gegenüber den anderen Wegen abzugrenzen. Das Isoliergas passiert dann zunächst einen Druckreduzierer und das geöffnete Ventil 65. Der Rückführungsweg 60 ist in Fig. 1 über Pfeile symbolisiert. Der Kompressor 3 wird auf den Rückführungsweg 60 zur Erzeugung des benötigten fördert Druckes für den Transport des Isoliergases zurück in den Anlagenraum 1 eingesetzt. Das Isoliergas wird nach dem passieren des Ventils 65 durch einen Druckreduzierer geführt und vom Kompressor 3 an gesaugt. Nach dem Verlassen des Kompressors 3 passiert das Isoliergas dem Kühler 32, wo es aber in diesem Fall nicht abgekühlt wird. Das Isoliergas wird dann weiter durch das Ventil 31 durch die beiden Filter 12 und 13 geführt. Anschließend passiert das Isoliergas das geöffnete Ventil 66 sowie einen weiteren Druckreduzierer. Auf dem Rückführungsweg 60 ist das Leitungsheizgerät 90 vorgesehen. Dieses Leitungsheizgeräte 90 wird verwendet, wenn das Isoliergas auf dem Rückführungsweg 60 so weit abgekühlt, dass sich einzelne Komponenten des Gases verflüssigen. Diese Verflüssigung einzelner Komponenten würde, wie bereits beschrieben, zu einer Änderung des Mischungsverhältnisses des Isoliergases im Anlagenraum 1 führen. Der Gefahr einer möglichen Verflüssigung einzelner Komponenten wird durch einen Nachheizen des Isoliergases auf dem Rückführungsweg mithilfe des Leitungsheizgerätes 90 begegnet. Das Leitungsheizgerät 90 wird von der Steuerung 8 über die Stellleitung 88 geregelt. Die für diese Regelung benötigten Informationen werden der Steuerung 8 durch Sensoren, wie beispielsweise den Zustandssensor 33 zur Verfügung gestellt. Für die Regelung des Leitungsheizgerätes 90 können auch weitere Sensoren vorgesehen werden, die in Fig. 1 nicht dargestellt sind. Weiterhin ist es möglich mehrere Leitungsheizgeräte 90 auf dem Rückführungsweg 60 vorzusehen. Am Ende des Rückführungsweges 60 wird das Isoliergas über die Kupplung 11 zurück in den Anlagenraum 1 geführt. Es ist möglich, auf dem Rückführungsweg des Servicegerätes mehrere Anschlüsse oder Kupplungen zur Verbindung mit Anlagenräumen von Schaltanlagen vorzusehen, wie beispielsweise die Ersatzkupplung 14. In Fig. 2 Ist deshalb neben der verwendeten Kupplung 11 eine weitere Kupplung 51 vorgesehen, an der im dargestellten Fall allerdings gerade keine Schaltanlage angeschlossen ist.

Der Umgehungsweg 70 dient der Umgehung der Vakuumpumpe 4 bei der Entnahme des Isoliergases aus dem Anlagenraum 1. Dieser Umgehungsweg 70 mündet nach der Umgehung der Vakuumpumpe 4 in den bereits beschriebenen Entnahmeweg 50. Bei Verwendung des Umgehungsweges 70 erfolgt der Transport des Isoliergases vom Anlagenraum 1 zum Speicherbehälter 6 bzw. der Gasflasche 5 nur mithilfe des Kompressors 3. Es werden in diesem Fall keine weiteren Aggregate zum Aufbau eines für den Transport des mehrkomponentigen Gases benötigten Druckes verwendet. Wenn der Umgehungsweg 70 verwendet werden soll wird das Ventil 41 geschlossen und das Ventil 71 geöffnet.

Die Evakuierpumpe 2 ist in Fig. 1 im rechten oberen Bereich dargestellt. Diese Evakuierpumpe 2 dient dazu, die Luft aus dem Anlagenraum 1 vor der Befüllung mit dem Isoliergas zu entfernen. Dazu werden die Ventile 41 und 71 geschlossen und Ventil 21 geöffnet. Die Evakuierpumpe 2 saugt dann die Luft aus dem Anlagenraum 1 ab und gibt sie an die Umgebung ab. Das Entfernen der Luft aus dem Anlagenraum 1 dient ebenfalls der Aufrechterhaltung eines konstanten Mischungsverhältnis es der einzelnen Komponenten des Isoliergases zueinander. Würde eine signifikante Menge an Luft im Anlagenraum vor der Befüllung verbleiben würde das Isoliergas durch diese Luft verdünnt werden, was wiederum zu einer unerwünschten Veränderung der Eigenschaften der Gasmischungen führen würde.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

## Patentansprüche

1. Servicegerät für ein mehrkomponentiges Isoliergas, für den Einsatz bei der Wartung von elektrischen Schaltanlagen mit einem Anlagenraum, umfassend
- einen Kompressor (3) mit nachgeschaltetem Kühler (32),
- einen Speicherbehälter (6),
- wobei das Servicegerät an einen Anlagenraum (1) angeschlossen ist, wobei der Kompressor (3) das Isoliergas bei der Entnahme aus dem Anlagenraum (1) verdichtet, wobei alle Komponenten des Isoliergases in dem Kompressor (3) im gasförmigen Zustand verbleiben, wobei ein Leitungsheizgerät (90) vorgesehen ist, welches zumindest teilweise eine Rohrleitung zwischen dem Speicherbehälter (6) und dem Anlagenraum (1) und/oder Elemente in der Rohrleitung, wie beispielsweise Filtergehäuse oder Ähnliches erwärmt **dadurch gekennzeichnet, dass** der Kühler (32) durch eine Steuerung (8) so geregelt ist, dass sich alle Komponenten des Isoliergases beim Verlassen des Kühlers immer noch in der gasförmigen Phase befinden und dass eine Kondensierung des Isoliergases im Speicherbehälter (6) oder im Leitungssystem zwischen Kühler und Speicherbehälter (6) erfolgt, wobei das Leitungssystem an dieser Stelle so beschaffen ist, dass auch verflüssigte Komponenten in flüssiger Form in den Speicherbehälter (6) gelangen, wo dann eine Wiedervermischung mit den dort kondensierenden verbleibenden Komponenten erfolgt und ein Speicherheizgerät (61) für den Speicherbehälter (6) vorgesehen ist, wobei das Speicherheizgerät (61) dazu dient, das Isoliergas im Speicherbehälter (6) auf eine Temperatur oberhalb der kritischen Temperatur aller Komponenten zu erhitzen und beim Befüllen des Anlagenraumes (1) das Speicherheizgerät (61) das Isoliergas auf eine Temperatur oberhalb der kritischen Temperatur aller Komponenten des Isoliergases erwärmt.

2. Servicegerät nach Anspruch 1, **dadurch gekennzeichnet, dass** die Steuerung (8) den Arbeitspunkt des Kompressors (3) und/oder Kühlers (32) in Abhängigkeit von mindestens einem, von einem Sensor gemessenen aktuellen Parameter des Isoliergases regelt.

3. Servicegerät nach einem der vorhergehenden Ansprüche, **dadurch gekennzeichnet, dass** die Steuerung (8) den Arbeitspunkt des Speicherheizgerätes (61) in Abhängigkeit von mindestens einem, von einem Sensor gemessenen aktuellen Parameter des Isoliergases regelt und/oder der Speicherbehälter (6) als auswechselbare Gasflasche (5) ausgebildet ist oder der Speicherbehälter (6) fest am Servicegerät angeordnet ist.

4. Servicegerät nach einem der vorhergehenden Ansprüche, **dadurch gekennzeichnet, dass** eine Evakuierpumpe (2) vorgesehen ist, die der Evakuierung des Anlagenraumes (1) dient und/oder eine insbesondere trockenlaufende, ölfreie Vakuumpumpe (4) vorgesehen ist, die in Strömungsrichtung des Isoliergases vor dem Kompressor (3) angeordnet ist.

5. Servicegerät nach einem der vorhergehenden Ansprüche, **dadurch gekennzeichnet, dass** ein Filter (7) vorgesehen ist, der in Strömungsrichtung des Isoliergases vor der Vakuumpumpe (4) angeordnet ist und/oder ein Trocknungsfilter (12) und/oder ein Partikelfilter (13) vorgesehen ist/sind, wobei dieser/diese Filter in Strömungsrichtung nach dem Kompressor (3) angeordnet ist/sind.

6. Servicegerät nach einem der vorhergehenden Ansprüche, **dadurch gekennzeichnet, dass** eine Wiegeeinrichtung (53) vorgesehen ist, die das aktuelle Gewicht der Gasflasche (5) bestimmtund/oder der Kühler (32) mit dem Kompressor (3) integriert, insbesondere in einem gemeinsamen Gestell oder Gehäuse ausgeführt ist, oder der Kühler (32) vom Kompressor (3) getrennt, insbesondere in der Nähe des Speicherbehälters (6) vorgesehen ist.

7. Servicegerät nach einem der vorhergehenden Ansprüche, **dadurch gekennzeichnet, dass** das Isoliergas als Isoliergas aufweisend oder bestehend aus einer Trägerkomponente und wenigstens einer Zusatzkomponente ausgewählt aus der Gruppe bestehend aus C5-Keton, HFO1234ze, HFO1234yf, Fluoronitril oder einer Kombination daraus ausgebildet ist.

8. Verfahren für das Handling eines mehrkomponentigen Isoliergases bei der Wartung von elektrischen Schaltanlagen **gekennzeichnet durch** die Abfolge folgender Schritte:
- Entnahme des Isoliergases aus dem Anlagenraum (1),
- Komprimierung des Isoliergases in einem Kompressor (3), wobei der Kompressor (3) so betrieben wird, dass alle Komponenten innerhalb des Kompressors (3) in der gasförmigen Phase verbleiben,
- Transport des komprimierten Isoliergases in der gasförmigen Phase zu einem Speicherbehälter (6), wobei das Isoliergas erst im Speicherbehälter (6) oder im letzten Stück einer Rohrleitung vor dem Speicherbehälter (6) kondensiert, wobei das Rohrleitungssystem vor dem Speicherbehälter (6) so gestaltet ist, dass darin verflüssigten Teile oder Komponenten des Isoliergases ebenfalls in den Speicherbehälter (6) geführt werden und sich dort dann wieder mit dem übrigen, ebenfalls verflüssigten Teilen bzw. Komponenten vermischen,
- Speicherung des flüssigen Isoliergases in dem Speicherbehälter (6),
- Erwärmung des Isoliergases in dem Speicherbehälter (6) auf eine Temperatur oberhalb der kritischen Temperatur aller Komponenten des Isoliergases vor der Befüllung des Anlagenraumes (1),
- und Transport des auf eine überkritische Temperatur erwärmten, gasförmigen Isoliergases, insbesondere durch den Kompressor (3) in den Anlagenraum (1).

9. Verfahren nach Anspruch 8, **dadurch gekennzeichnet, dass** das komprimierte Isoliergas in einem in Fließrichtung dem Kompressor nachgeschalteten Kühler (32) derart gekühlt wird, dass in dem Kühler (32) möglichst kein Bestandteil des Isoliergases kondensiert.

10. Verfahren nach Anspruch 8 oder 9, **dadurch gekennzeichnet, dass** das vor dem Transport des überkritisch erwärmten Isoliergases in den Anlagenraum (1) die Luft aus dem Anlagenraum (1) mit Hilfe einer Evakuierpumpe (2) abgesaugt wird.

11. Verfahren nach einem der Ansprüche 8 bis 10, **dadurch gekennzeichnet, dass** der Kompressor (3) bei der Verdichtung des Isoliergases von einer Steuerung (8) so geregelt wird, dass alle Komponenten des Isoliergases während des Kompressionsprozesses in der gasförmigen Phase verbleiben.

12. Verfahren nach einem der Ansprüche 8 bis 11, **dadurch gekennzeichnet, dass** das Gewicht der Gasflasche (5) während des Erwärmens des darin befindlichen Isoliergases mit Hilfe einer Wiegeeinrichtung gemessen und der Messwert der Steuerung (8) zugeführt wird.

13. Verfahren nach einem der Ansprüche 8 bis 12, **dadurch gekennzeichnet, dass** das Isoliergas als Isoliergas aufweisend oder bestehend aus einer Trägerkomponente und wenigstens einer Zusatzkomponente ausgewählt aus der Gruppe bestehend aus C5-Keton, HFO1234ze, HFO1234yf, Fluoronitril oder einer Kombination daraus ausgebildet ist.

14. Verwendung eines Servicegerätes nach einem der Ansprüche 1 bis 7, welches insbesondere zur Durchführung eines Verfahrens nach einem der Ansprüche 8 bis 13 dient, bei der Wartung von Schaltanlagen, die mit einem Isoliergas befüllt sind, welches aus mehreren unterschiedlichen Komponenten besteht, wobei diese unterschiedlichen Komponenten unterschiedliche physikalische Eigenschaften, wie beispielsweise unterschiedliche kritische Punkte aufweisen.

15. Verwendung eines Servicegerätes nach Anspruch 14, **dadurch gekennzeichnet, dass** das mehrkomponentige Isoliergas, mit dem die zu wartenden Schaltanlagen befüllt sind, kein SF6 Schwefelhexafluorid enthält und dieses Isoliergas zumindest eine Trägerkomponente aufweist, welche durch N₂ oder CO₂ gebildet wird.

## Claims

1. Service device for a multi-component insulating gas, for use during the maintenance of electrical switchgears with a plant room, comprising
- a compressor (3) with a downstream cooler (32),
- a storage container (6),
- wherein the service device is connected to a plant room (1),
wherein the compressor (3) compresses the insulating gas during the removal from the plant room (1), wherein all components of the insulating gas remain in the compressor (3) in the gaseous state, wherein a line heating device (90) is provided, which at least partially heats a pipeline between the storage container (6) and the plant room (1) and/or elements in the pipeline, such as, for example, a filter housing or the like **characterised in that** the cooler (32) is regulated by a controller (8) such that all components of the insulating gas are still in the gaseous phase when leaving the cooler and that a condensation of the insulating gas takes place in the storage container (6) or in the line system between cooler and storage container (6), wherein the line system is designed at this point such that even liquefied components enter the storage container (6) in liquid form, where a renewed admixture with the remaining components condensing there then occurs and a storage heating device (61) is provided for the storage container (6), wherein the storage heating device (61) is used to heat the insulating gas in the storage container (6) to a temperature above the critical temperature of all components and during the filling of the plant room (1) the storage heating device (61) heats the insulating gas to a temperature above the critical temperature of all components of the insulating gas.

2. Service device according to claim 1, **characterised in that** the controller (8) regulates the operating point of the compressor (3) and/or cooler (32) as a function of at least one current parameter of the insulating gas measured by a sensor.

3. Service device according to any one of the preceding claims, **characterised in that** the controller (8) regulates the operating point of the storage heating device (61) as a function of at least one current parameter of the insulating gas measured by a sensor and/or the storage container (6) is designed as an exchangeable gas cylinder (5) or the storage container (6) is fixedly arranged on the service device.

4. Service device according to any one of the preceding claims, **characterised in that** an evacuation pump (2) is provided, which serves for evacuating the plant room (1) and/or an, in particular, dry-running, oil-free vacuum pump (4) is provided, which is arranged upstream of the compressor (3) in the flow direction of the insulating gas.

5. Service device according to any one of the preceding claims, **characterised in that** a filter (7) is provided, which is arranged upstream of the vacuum pump (4) in the flow direction of the insulating gas and/or a drying filter (12) and/or a particle filter (13) is/are provided, wherein this filter/these filters is/are arranged downstream of the compressor (3) in the direction of flow.

6. Service device according to any one of the preceding claims, **characterised in that** a weighing device (53) is provided, which determines the current weight of the gas cylinder (5) and/or the cooler (32) is integrated with the compressor (3), in particular, is carried into execution in a common frame or housing, or the cooler (32) is separated from the compressor (3), in particular, is provided in the vicinity of the storage container (6).

7. Service device according to any one of the preceding claims, **characterised in that** the insulating gas is formed as an isolating gas having or consisting of a carrier component and at least one component selected from the group consisting of C5 ketone, HF01234ze, HF01234yf, fluoronitrile or a combination thereof.

8. Method for the handling of a multi-component insulating gas during the maintenance of electrical switchgears **characterised by** the sequence of the following steps:
- removal of the insulating gas from the plant room (1),
- compressing the insulating gas in a compressor (3), wherein the compressor (3) is operated so that all components within the compressor (3) remain in the gaseous phase,
- transport of the compressed insulating gas in the gaseous phase to a storage container (6), wherein the insulating gas only condenses in the storage container (6) or in the last piece of a pipeline upstream of the storage container (6), wherein the pipeline system is designed upstream of the storage container (6), so that parts or components of the insulating gas liquefied therein are also guided into the storage container (6) and are mixed there then again with the remaining, also liquefied parts or components,
- storage of the liquid insulating gas in the storage container (6),
- heating of the insulating gas in the storage container (6) to a temperature above the critical temperature of all components of the insulating gas before filling the plant room (1),
- and transport of the gaseous insulating gas heated to a supercritical temperature, in particular, through the compressor (3) into the plant room (1).

9. Method according to claim 8, **characterised in that** the compressed insulating gas is cooled in a cooler (32) connected downstream of the compressor in the flow direction in such a manner that as far as possible no component of the insulating gas condenses in the cooler (32).

10. Method according to claim 8 or 9, **characterised in that** before the transport of the supercritically heated insulating gas into the plant room (1) the air is sucked off from the plant room (1) with the aid of an evacuation pump (2).

11. Method according to any one of claims 8 to 10, **characterised in that** the compressor (3) is regulated by the controller (8) during the compression of the insulating gas such that all components of the insulating gas remain in the gaseous phase during the compression process.

12. Method according to any one of claims 8 to 11, **characterised in that** the weight of the gas cylinder (5) during the heating of the insulating gas located therein is measured with the aid of a weighing device and the measured value is supplied to the controller (8).

13. Method according to any one of claims 8 to 12, **characterised in that** the insulating gas is formed as an insulating gas having or consisting of a carrier component and at least one additional component selected from the group consisting of C5 ketone, HF01234ze, HF01234yf, fluoronitrile or a combination thereof.

14. Use of a service device according to any one of claims 1 to 7, which is used, in particular, for carrying out a method according to any one of claims 8 to 13, for the maintenance of switchgears, which are filled with an insulating gas, which consists of a plurality of different components, wherein said different components have different physical properties, such as, for example, different critical points.

15. Use of a service device according to claim 14, **characterised in that** the multi-component insulating gas, with which the switchgears to be maintained are filled, contains no SF₆ sulphur hexafluoride and this insulating gas has at least one carrier component, which is formed by N₂ or CO₂.

## Revendications

1. Appareil de maintenance pour un gaz isolant à plusieurs composants, destiné à être utilisé pour l'entretien d'installations électriques de distribution présentant une chambre des installations, comprenant :
- un compresseur (3) avec refroidisseur (32) placé en aval,
- un réservoir de stockage (6),
- dans lequel l'appareil de maintenance est raccordé à une chambre des installations (1),
dans lequel le compresseur (3) comprime le gaz isolant lors de son extraction hors de la chambre des installations (1), dans lequel tous les composants du gaz isolant restent à l'état gazeux dans le compresseur (3), dans lequel un appareil de chauffage de conduit (90) est prévu, qui chauffe au moins partiellement une canalisation située entre le réservoir de stockage (6) et la chambre des installations (1) et/ou des éléments situés dans la canalisation, par exemple des boîtiers de filtre ou similaires, **caractérisé en ce que**
le refroidisseur (32) est régulé grâce à une commande (8) de sorte que tous les composants du gaz isolant se trouvent toujours en phase gazeuse à la sortie du refroidisseur et de sorte qu'une condensation du gaz isolant a lieu au sein du réservoir de stockage (6) ou au sein du système de conduite entre le refroidisseur et le réservoir de stockage (6), dans lequel le système de conduite est conçu à cet endroit de sorte que les composants liquéfiés également parviennent sous forme liquide dans le réservoir de stockage (6) où a alors lieu un rebrassage avec les composants restants en train de s'y condenser, et un appareil de chauffage de réservoir (61) destiné au réservoir de stockage (6) est prévu, dans lequel l'appareil de chauffage de réservoir (61) sert à chauffer le gaz isolant dans le réservoir de stockage (6) à une température supérieure à la température critique de tous les composants et l'appareil de chauffage de réservoir (61) chauffe le gaz isolant à une température supérieure à la température critique de tous les composants du gaz isolant lors du remplissage de la chambre des installations (1)

2. Appareil de maintenance selon la revendication 1, **caractérisé en ce que** la commande (8) régule le point de travail du compresseur (3) et/ou du refroidisseur (32) en fonction d'au moins un paramètre actuel, mesuré par un capteur, du gaz isolant.

3. Appareil de maintenance selon l'une quelconque des revendications précédentes, **caractérisé en ce que** la commande (8) régule le point de fonctionnement de l'appareil de chauffage de réservoir (61) en fonction d'au moins un paramètre actuel, mesuré par un capteur, du gaz isolant et/ou le réservoir de stockage (6) est réalisé sous forme de bouteille de gaz (5) échangeable ou le réservoir de stockage (6) est agencé de manière fixe au niveau de l'appareil de maintenance.

4. Appareil de maintenance selon l'une quelconque des revendications précédentes, **caractérisé en ce qu'**une pompe d'évacuation (2) est prévue, qui sert à l'évacuation de la chambre des installations (1) et/ou une pompe à vide (4), de manière particulière sans huile et fonctionnant à sec, est prévue, qui est agencée avant le compresseur (3) dans le sens d'écoulement du gaz isolant.

5. Appareil de maintenance selon l'une quelconque des revendications précédentes, **caractérisé en ce qu'**un filtre (7) est prévu, qui est agencé en amont de la pompe à vide (4) dans le sens d'écoulement du gaz isolant et/ou un filtre de séchage (12) et/ou un filtre à particules (13) est/sont prévus, dans lequel ledit/lesdits filtre(s) est/sont agencé(s) après le compresseur (3) dans le sens d'écoulement.

6. Appareil de maintenance selon l'une quelconque des revendications précédentes, **caractérisé en ce qu'**un dispositif de pesée (53) est prévu, qui détermine le poids actuel de la bouteille de gaz (5) et/ou intègre le refroidisseur (32) avec le compresseur (3), et est de manière particulière réalisé au sein d'un châssis ou boîtier commun, ou le refroidisseur (32) est séparé du compresseur (3) et est de manière particulière prévu à proximité du réservoir de stockage (6).

7. Appareil de maintenance selon l'une quelconque des revendications précédentes, **caractérisé en ce que** le gaz isolant est réalisé sous forme de gaz isolant présentant, ou étant constitué de, un composant support et au moins un composant supplémentaire choisi parmi le groupe constitué de cétone en C5, HFO1234ze, HFO1234yf, fluoronitrile ou une combinaison de ceux-ci.

8. Procédé de manipulation d'un gaz isolant à plusieurs composants lors de l'entretien d'installations électriques de distribution, **caractérisé par** la séquence des étapes ci-dessous :
- extraction du gaz isolant hors de la chambre des installations (1),
- compression du gaz isolant dans un compresseur (3), dans lequel le compresseur (3) est exploité de sorte que tous les composants situés à l'intérieur du compresseur (3) restent en phase gazeuse,
- transport du gaz isolant comprimé en phase gazeuse vers un réservoir de stockage (6), dans lequel le gaz isolant ne se condense que dans le réservoir de stockage (6) ou dans la dernière pièce d'une canalisation située avant le réservoir de stockage (6), dans lequel le système de canalisation situé avant le réservoir de stockage (6) est conçu de sorte que des parties ou composants du gaz isolant qui y sont liquéfié(e)s sont également acheminé(e)s dans le réservoir de stockage (6) et s'y mélangent à nouveau avec les parties ou composants restant(e)s également liquéfié(e)s,
- stockage du gaz isolant liquide dans le réservoir de stockage (6),
- chauffage du gaz isolant dans le réservoir de stockage (6) à une température supérieure à la température critique de tous les composants du gaz isolant avant le remplissage de la chambre des installations (1),
- et transport du gaz isolant sous forme gazeuse chauffé à une température supercritique, de manière particulière grâce au compresseur (3) jusque dans la chambre des installations (1).

9. Procédé selon la revendication 8, **caractérisé en ce que** le gaz isolant comprimé est refroidi dans un refroidisseur (32) placé en aval du compresseur dans le sens d'écoulement de telle manière que dans la mesure du possible aucun composant du gaz isolant ne se condense dans le refroidisseur (32).

10. Procédé selon la revendication 8 ou 9, **caractérisé en ce que** l'air est aspiré hors de la chambre des installations (1) à l'aide d'une pompe d'évacuation (2) avant le transport du gaz isolant chauffé de manière supercritique jusque dans la chambre des installations (1).

11. Procédé selon l'une quelconque des revendications 8 à 10, **caractérisé en ce que**, lors de la compression du gaz isolant, le compresseur (3) est régulé par une commande (8) de sorte que tous les composants du gaz isolant restent en phase gazeuse pendant le processus de compression.

12. Procédé selon l'une quelconque des revendications 8 à 11, **caractérisé en ce que** le poids de la bouteille de gaz (5) est mesuré à l'aide d'un dispositif de pesée pendant le chauffage du gaz isolant qui s'y trouve et la valeur mesurée est fournie à la commande (8).

13. Procédé selon l'une quelconque des revendications 8 à 12, **caractérisé en ce que** le gaz isolant est réalisé sous forme de gaz isolant présentant, ou étant constitué de, un composant support et au moins un composant supplémentaire choisi parmi le groupe constitué de cétone en C5, HFO1234ze, HFO1234yf, fluoronitrile ou une combinaison de ceux-ci.

14. Utilisation d'un appareil de maintenance selon l'une quelconque des revendications 1 à 7, qui sert de manière particulière à mettre en œuvre un procédé selon l'une quelconque des revendications 8 à 13, lors de l'entretien d'installations de distribution remplies d'un gaz isolant constitué de plusieurs composants différents, dans lequel lesdits composants différents présentent des propriétés physiques différentes, par exemple des points critiques différents.

15. Utilisation d'un appareil de maintenance selon la revendication 14, **caractérisée en ce que** le gaz isolant à plusieurs composants dont les installations de distribution à entretenir sont remplies ne contient pas d'hexafluorure de soufre SF6 et ledit gaz isolant présente au moins un composant support formé de N₂ ou de CO₂.
